# FASCICULE DE BREVET EUROPEEN

(11) **EP 1 274 957 B1**
(45) Date de publication et mention de la délivrance du brevet: **21.05.2008**
(21) Numéro de dépôt: 01921421.2
(22) Date de dépôt: 23.03.2001
(51) Int. Cl.: F17C 13/04, F16K 1/30, F16K 35/00, F17C 5/00, F17C 5/06

(54) **ROBINET AVEC OU SANS DETENDEUR INTEGRE POUR RECIPIENT DE GAZ SOUS PRESSION**
VENTIL FÜR EINEN DRUCKGASBEHÄLTER MIT ODER OHNE INTEGRIERTEN DRUCKMINDERER
VALVE ASSEMBLY WITH OR WITHOUT INTEGRATED REDUCER FOR PRESSURISED GAS CONTAINER

(30) Priorité: 30.03.2000 FR 0004040
(43) Date de publication de la demande: 15.01.2003
(73) Titulaire: L'AIR LIQUIDE, Société Anonyme pour l'Etude et l'Exploitation des Procédés Georges Claude, 75007 Paris (FR)
(72) Inventeur: PISOT, Philippe, F-95290 L'Isle Adam (FR)
(74) Mandataire: Pittis, Olivier
(86) Numéro de dépôt international: PCT/FR2001/000892
(87) Numéro de publication internationale: WO 2001/075355

(56) Documents cités:
- EP-A- 0 476 518
- GB-A- 1 258 576
- US-A- 4 478 242
- US-A- 5 722 638

## Description

La présente invention a pour objet un robinet avec ou sans détendeur intégré pour récipient de gaz sous pression et un tel robinet équipé d'une prise de conditionnement pour le remplissage du récipient associé au robinet ou au robinet détendeur intégré.

De nombreuses bouteilles destinées à contenir un gaz sous pression sont équipées d'un robinet détendeur intégré. Un robinet détendeur intégré consiste en un dispositif unique qui permet à la fois de commander l'ouverture ou la fermeture de la bouteille et également de régler la pression à laquelle le gaz contenu dans la bouteille sera délivré. Ces robinets détendeurs intégrés comportent un raccord d'entrée qui permet le remplissage du récipient sur lequel il est monté à l'aide d'une prise de conditionnement reliée à une source dudit gaz sous pression.

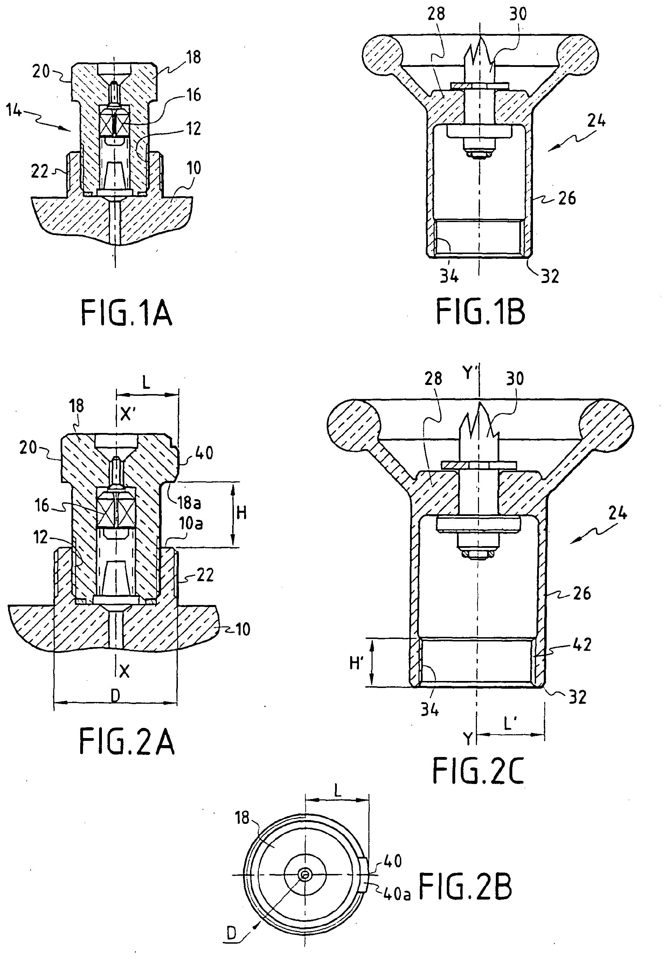

Sur les figures annexées 1 a et 1 b, on a représenté un exemple de réalisation du raccord de remplissage et de la prise de conditionnement. Sur la figure 1a, on a représenté le corps 10 du robinet détendeur intégré muni d'un taraudage 12 sur lequel est fixé le raccord de remplissage 14. Le raccord 14 comporte un clapet 16 d'obturation du robinet. L'extrémité supérieure 18 de ce raccord définit une surface latérale cylindrique 20 de guidage dont la fonction sera explicitée ultérieurement. L'ensemble constitué par le raccord et le robinet détendeur comporte également un filetage 22 pour la fixation d'une prise de conditionnement 24 représentée sur la figure 1b. La prise de conditionnement 24 a la forme générale d'un manchon cylindrique 26 obturé par un fond 28 dans lequel est fixée la conduite flexible 30 de remplissage. A proximité de son extrémité libre 32, le manchon 26 est muni d'un taraudage 34 pour coopérer avec le filetage 22 du robinet détendeur.

L'utilisation de cet ensemble est très simple. La prise de conditionnement 24 est amenée en regard du raccord de remplissage 14 puis enfoncée autour de ce raccord en étant guidée par la surface 20. Par rotation de la prise de conditionnement 24, le taraudage 34 coopère avec le filetage 22 pour assurer une solidarisation étanche de la prise de conditionnement sur le raccord de remplissage. Cette opération étant réalisée, le clapet 16 est ouvert, soit sous l'effet de la pression du gaz dans la conduite flexible 30, soit par une commande manuelle.

Il faut ajouter que le filetage et le taraudage 22 et 34 du raccord de remplissage et de la prise de conditionnement sont normalisés et correspondent au type de gaz utilisé.

On comprend qu'il est souhaitable de rendre impossible ou difficile le remplissage non autorisé de bouteilles de gaz comprimé. En effet, ces manipulations effectuées par des personnes inexpérimentées peuvent être dangereuses et elles peuvent également entraîner la pollution de la bouteille, par exemple si le gaz introduit dans la bouteille n'est pas le même que le gaz résiduel qui s'y trouve ou, selon le cas, si l'opération de remplissage n'est pas réalisée avec un minimum de précautions.

On comprend donc qu'il existe un réel intérêt à disposer de bouteilles destinées à contenir un gaz sous pression et équipées de robinets avec ou sans détendeurs intégrés qui ne puissent être remplies que par le propriétaire légitime de la bouteille. En d'autres termes, le problème qui se pose est d'empêcher le remplissage d'une bouteille ou d'un récipient de gaz par une personne non autorisée à le faire mais sans pour autant conduire à une complication de l'opération de remplissage de la bouteille, ce qui affecterait la productivité des centres de conditionnement.

Pour atteindre ce but selon l'invention, le robinet avec ou sans détendeur intégré pour récipient de gaz sous pression destiné à coopérer avec une prise de conditionnement pour permettre le remplissage dudit récipient comprend un raccord de remplissage présentant un axe longitudinal, une extrémité de guidage et un filetage décalé axialement par rapport à ladite extrémité, ladite extrémité ayant un contour muni d'au moins une empreinte faisant saillie hors dudit contour, en projection dans un plan orthogonal audit axe longitudinal, l'empreinte de l'extrémité dudit raccord étant sécante avec un cercle dont le diamètre est égal au plus petit des diamètres interne et externe dudit filetage et centré sur ledit axe.

On comprend que grâce à la présence de l'empreinte qui constitue un relief sur l'extrémité du raccord de remplissage de la bouteille, il est impossible de remplir indûment la bouteille à l'aide d'une prise de conditionnement de type standard. On comprend également que l'utilisation d'une prise de conditionnement présentant par exemple un filetage de diamètre plus important pour s'affranchir du problème posé par la présence de l'empreinte ne permettrait pas d'obtenir la solidarisation de la prise de conditionnement sur le raccord détendeur.

Un autre objet de l'invention est de fournir un robinet avec ou sans détendeur intégré pour récipient de gaz sous pression équipé d'une prise de conditionnement apte à coopérer avec ledit robinet pour permettre le remplissage dudit récipient, ledit robinet comprenant un raccord de remplissage présentant un axe longitudinal, une extrémité de guidage et un filetage décalé axialement par rapport à ladite extrémité, ladite extrémité ayant un contour muni d'au moins une empreinte faisant saillie hors dudit contour, ladite prise de conditionnement présentant une extrémité munie d'un filetage apte à coopérer avec le filetage dudit robinet, le filetage de ladite prise présentant au moins une empreinte conjuguée de l'empreinte de l'extrémité dudit raccord, en projection dans un plan orthogonal audit axe longitudinal, l'empreinte de l'extrémité dudit raccord étant sécante avec un cercle dont le diamètre est égal au plus petit des diamètres interne et externe du filetage de ladite prise et centré sur ledit axe, par quoi pour une position angulaire donnée autour dudit axe longitudinal ladite prise peut être engagée autour dudit raccord et les deux filetages peuvent coopérer entre eux.

D'autres caractéristiques et avantages de l'invention apparaîtront mieux à la lecture de la description qui suit de plusieurs modes de réalisation de l'invention donnés à titre d'exemples non limitatifs.

La description se réfère aux figures annexées sur lesquelles :
les figures 1a et 1b déjà décrites montrent en coupe verticale un raccord de conditionnement et une prise de conditionnement de type standard ;
la figure 2a montre en coupe verticale un raccord de remplissage conforme à l'invention selon un premier mode de mise en oeuvre ;
la figure 2b est une vue de dessus du raccord de remplissage de la figure 2a ;
la figure 2c est une vue en coupe verticale d'une prise de conditionnement apte à coopérer avec le raccord de la figure 2a ;
la figure 3a est une vue en coupe verticale d'un raccord de conditionnement du type femelle conforme à l'invention ;
la figure 3b montre une prise de conditionnement apte à coopérer avec le raccord de la figure 3a ;
la figure 4a montre en coupe verticale partielle un deuxième mode de réalisation d'un raccord de remplissage mâle conforme à l'invention ;
la figure 4b est une vue en coupe horizontale selon la ligne B-B de la figure 4a ;
la figure 4c est une vue en coupe verticale d'une prise de conditionnement apte à coopérer avec le raccord de remplissage de la figure 4a ;
la figure 4d est une vue en coupe selon la ligne D-D de la prise de conditionnement de la figure 4c ;
la figure 5a montre un premier mode de réalisation d'un bouchon de sécurité en coupe verticale pour un raccord de remplissage conforme à l'invention ;
la figure 5b est une vue en coupe horizontale selon la ligne B-B de la figure 5a ;
la figure 6a est une vue en coupe verticale d'un deuxième mode de réalisation d'un bouchon d'obturation pour raccord de remplissage ; et
la figure 6b est une vue en coupe verticale partielle d'un outil de démontage du bouchon de la figure 6a.

Comme on l'a déjà exposé, le principe de l'invention consiste à prévoir au niveau de l'extrémité de guidage du raccord de remplissage au moins un relief qui fait saillie intérieurement ou extérieurement par rapport au contour de cette extrémité pour empêcher le remplissage de la bouteille ou plus généralement du récipient à l'aide d'une prise de conditionnement standard, ce remplissage ne pouvant être obtenu qu'à l'aide d'une prise de conditionnement adaptée et comportant de même un relief conjugué qui sera bien sûr en creux.

En se référant tout d'abord aux figures 2a à 2c, on va décrire un premier exemple de réalisation de l'invention appliqué au cas du raccord de remplissage et de la prise de conditionnement des figures 1a et 1b.

Selon ce mode de réalisation, l'extrémité 18 du raccord de remplissage comporte un relief 40 qui fait saillie hors de la paroi latérale 20 de cette extrémité sur un arc de cercle limité. La distance entre l'axe X et X' du raccord et le bord externe 40a du relief 40 est égale à L. Cette longueur L est légèrement supérieure au rayon externe D/2 du filetage 22 externe du corps de robinet détendeur intégré.

Comme le montre la figure 2c, le taraudage 34 réalisé à l'extrémité de la prise de conditionnement 24 est pourvu d'une encoche 42 correspondant à la forme du relief 40. Plus précisément, la distance entre l'axe Y-Y' de la prise de raccordement 24 et le fond de l'encoche 42 qui est appelée L' est très légèrement supérieure à la distance L. En outre, la longueur H' du filetage 22 de la prise de conditionnement est inférieure à la longueur H qui sépare l'épaulement inférieur 18a de l'extrémité 18 du raccord de remplissage de la face supérieure 10a du corps 2 du robinet détendeur.

Pour monter la prise de conditionnement 24 sur le raccordement de remplissage 14, on présente l'extrémité ouverte de la prise 24 en regard de l'extrémité 18 du raccord. Il faut bien sûr orienter angulairement la prise 24 pour que l'évidement 42 coïncide avec le relief 40. Dans cette position, il suffit d'abaisser la prise par rapport au raccord et de procéder au vissage de la prise sur le filetage 22. Cette opération est possible du fait que la longueur H' du taraudage de la prise est inférieure à la longueur H du raccord en dessous de son extrémité 18.

Dans l'exemple décrit précédemment, on a prévu un seul relief 40 faisant saillie hors de l'extrémité 18 du raccord de remplissage. On comprend que l'on pourrait en prévoir plusieurs, la prise de conditionnement étant elle-même munie au niveau de son taraudage 32 d'évidements correspondants. Des combinaisons particulières de relief et d'évidement peuvent constituer une forme de codage du robinet détendeur et donc de la bouteille, la prise de conditionnement devant bien sûr être conforme au codage correspondant par exemple à des natures de gaz comprimé différent contenu dans les bouteilles associées.

On comprend également que, a contrario avec une prise de conditionnement 24 du type représenté sur les figures 1b, il sera impossible de procéder à l'accouplement de la prise de conditionnement sur le raccord de remplissage et donc au remplissage de la bouteille sur laquelle est monté le robinet détendeur intégré.

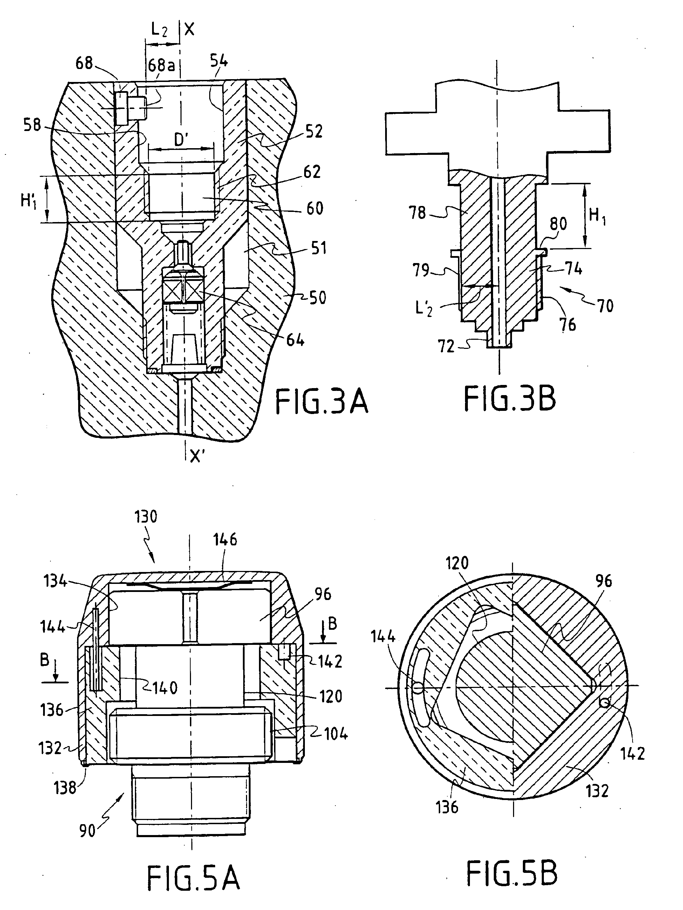

En se référant maintenant aux figures 3a et 3b, on va décrire un mode de mise en oeuvre de l'invention dans le cas où le raccord de remplissage est du type femelle. Sur la figure 3a, on a représenté une partie du corps 50 du robinet détendeur intégré dans l'alésage 51 duquel est monté le raccord femelle de remplissage 52. Ce raccord 52 comprend essentiellement un évidement d'axe X-X' référencé 54 comportant une partie supérieure 58 de guidage et une partie inférieure 60 munie d'un taraudage 62. Le raccord de remplissage 52 comporte bien sûr un clapet 64.

Un ergot 68 est fixé dans la paroi de la partie 58 de l'évidement 54. Cet ergot 68 constitue l'empreinte au sens dé la présente invention. La distance L₂ entre l'extrémité 68a de l'ergot 68 et l'axe X-X' du raccord est inférieure ou égale au rayon D'/2 externe du filetage 62.

La figure 3b montre un exemple de réalisation d'une prise de conditionnement 70 adaptée au raccord de remplissage de la figure 3a. Cette prise comprend une extrémité 72 pour agir sur le clapet 64 du raccord, une première partie cylindrique 74 dont le diamètre correspond à celui de la partie inférieure 60 de l'évidement 54 du raccord et qui est munie d'un filetage 76 pour coopérer avec le taraudage 62 du raccord et une deuxième partie cylindrique 78 dont le diamètre correspond à celui de la partie supérieure 58 de l'évidement du raccord. Le filetage 76 de la prise comporte une rainure longitudinale 79 dont les dimensions, en section par un plan orthogonal à l'axe Y-Y' de la prise, sont conjuguées de celles de l'ergot 68. La deuxième partie cylindrique 78 de la prise comporte une gorge annulaire 80 dans laquelle débouche l'extrémité supérieure de la rainure 79. La longueur axiale H₁ de la gorge 80 est au moins égale à la longueur H'₁ du taraudage 62 du raccord et la distance L'2 entre le fond de la rainure 79 et l'axe Y-Y' de la prise est légèrement inférieure à la distance L2 entre la face 68a de l'ergot 68 et l'axe X-X' du raccord.

L'utilisation de la prise de conditionnement 70 avec le raccord de remplissage de la figure 3a découle clairement de la description précédente. La prise doit être présentée en regard de l'évidement 54 du raccord de telle manière que la rainure 79 de la prise coïncide angulairement avec l'ergot 68. La prise 70 peut alors être engagée dans l'évidement 54 du raccord et la prise peut être vissée sur le taraudage 62 du raccord grâce à la présence de la gorge annulaire 80 qui autorise une libre rotation de la prise par rapport au raccord.

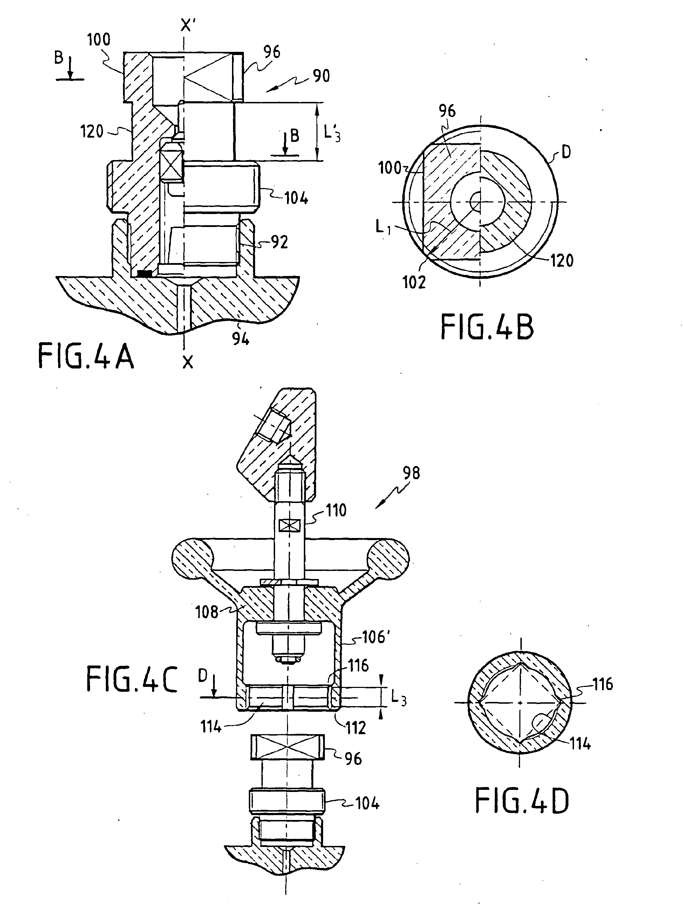

En se référant maintenant aux figures 4a à 4d, on va décrire un deuxième mode de réalisation de robinet détendeur intégré comportant un raccord de remplissage mâle.

Le raccord 90 comporte un filetage 92 de fixation sur le corps de robinet détendeur 94. Ce raccord comporte également une extrémité de guidage 96 pour la prise de conditionnement 98 représentée sur la figure 4c. Comme le montre mieux la figure 4b la paroi latérale 100 de l'extrémité de guidage 96 a une forme sensiblement carrée dont les angles 102 sont biseautés. Ces angles forment les empreintes du raccord au sens de la présente invention. Le raccord 90 comporte également un filetage 104 pour la fixation de la prise de conditionnement 98. Le filetage 104 présente un diamètre externe D/2 et la distance entre l'axe X-X' du raccord et les coins biseautés de la périphérie de l'extrémité 96 est égale à L1. Cette distance L1 est au moins égale au rayon D/2 du filetage 104. On comprend que la forme carrée de la paroi latérale de l'extrémité 96 constitue des reliefs ou empreintes analogues à ceux qui ont été décrits en liaison avec les deux premiers modes de réalisation. Ces reliefs sont donc au nombre de 4 dans ce cas particulier.

Sur la figure 4c, on a représenté la prise de conditionnement 98 qui comporte un manchon 106 muni d'un fond 108 dans lequel débouche le raccord 110 de la conduite de remplissage. A son extrémité libre 112 le manchon 106 est muni d'un taraudage 114 apte à coopérer avec le filetage 104 du raccord 90. Comme le montre mieux la figure 4d, le taraudage 114 comporte quatre évidements tels que 116 disposés à 90°C les uns des autres et correspondant aux coins biseautés 102 de la paroi latérale de l'extrémité 96 de guidage du raccord 90. On comprend qu'en présentant, selon une orientation angulaire convenable, la prise de conditionnement 98 en regard de l'extrémité 96 du raccord de remplissage, les évidements 116 permettent l'engagement de la prise de conditionnement sur le raccord de remplissage 90. Comme dans le cas des modes précédents de réalisation, la longueur axiale L₃ du taraudage 112 est supérieure à la longueur L'₃ correspondant à la portion cylindrique 120 du raccord 90 qui sépare l'extrémité de guidage 96 de ce raccord du filetage 104.

Afin d'améliorer encore la sécurité dans l'utilisation des bouteilles équipées de robinets détendeurs conformes à l'invention, il est possible de prévoir des bouchons de sécurité pour recouvrir le raccord de remplissage et rendre son accès plus difficile aux utilisateurs non autorisés.

Les figures 5a et 5b décrivent un premier mode de réalisation d'un tel bouchon.

Sur les figures 5a et 5b, le bouchon 130 est adapté à un raccord de remplissage 90 du type déjà décrit en liaison avec la figure 4a. Le bouchon 130 est constitué par un corps cylindrique 132 dans lequel se trouve une empreinte femelle carrée 134 correspondant à la forme de la partie d'extrémité 96 du raccord 90. Une bague tournante 136 est montée libre en rotation dans le corps 132 et maintenue en translation par un sertissage 138. La bague 136 comporte également une empreinte carrée femelle 140 correspondant à la forme de l'extrémité 96 du raccord de remplissage.

La rotation de cette bague 136 par rapport au corps 132 est limitée à 20° grâce à un système de butée angulaire matérialisé par une lumière 140 usinée dans la bague 136 accueillant une goupille 142 liée au corps 132. Cette rotation permet d'assurer les deux états suivants du bouchon :
- Un état verrouillé lorsque les deux carrés sont angulairement décalés ; et
- Un état déverrouillé lorsque les deux carrés coïncident.

Un ressort 144 permet de conserver le bouchon dans l'état verrouillé.

Le montage du bouchon 130 sur le raccord de remplissage se fait sans outil particulier. Il faut présenter l'empreinte carrée femelle 140 de la bague en face du carré 96 du raccord de remplissage. Cette opération accomplie, il faut enfoncer le bouchon tout en le tournant de façon à combattre l'effort du ressort 144 et arriver dans l'état de déverrouillage. Une fois le carré 96 du raccord de remplissage dans le logement carré 134 du corps du bouchon, le ressort 144 peut ramener la bague 130 dans l'état 1 (le bouchon est monté et verrouillé).

Un joint 146 du type soufflet, collé au fond du corps du bouchon 130, vient porter sur le dessus du raccord de remplissage. Il a pour fonction d'empêcher l'intrusion de poussière, d'eau, d'humidité, etc. dans le puits du clapet du raccord de remplissage. Si le clapet du raccord de remplissage fuit, le joint soufflet 146 se déforme et laisse la surpression s'évacuer vers le milieu ambiant.

Dans la configuration ci-dessus, une fois monté, le bouchon est lié en rotation avec le raccord de remplissage. Cette non-liberté en rotation peut inciter quelqu'un à le forcer avec un outil (pinces étau ou multiprises) ce qui entraînerait une dégradation extérieure du bouchon, mais en aucun cas l'outil, quel qu'il soit, ne doit transmettre le couple suffisant pour dévisser le raccord de remplissage.

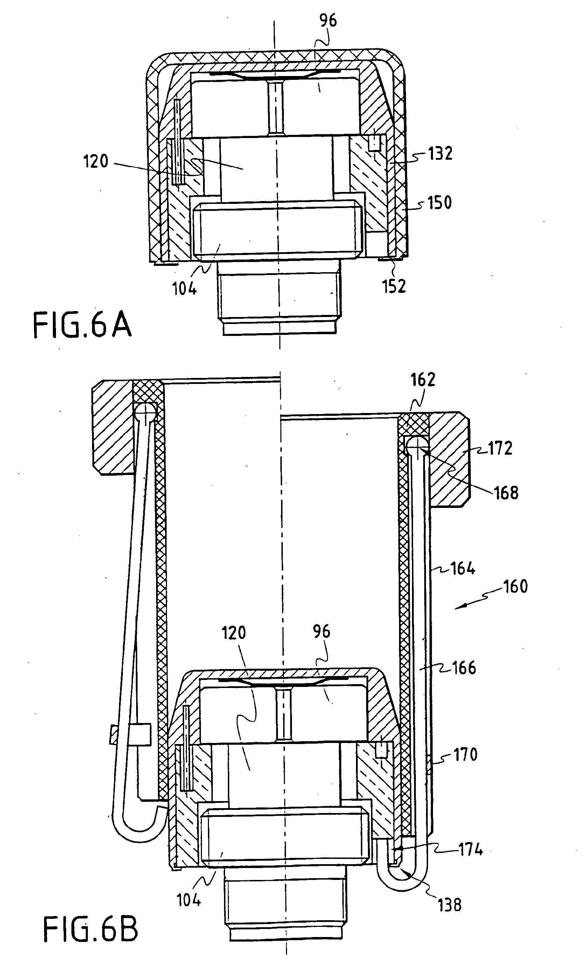

Pour éviter ce désagrément, la figure 6a montre une variante dans laquelle le bouchon du raccord de remplissage est libre en rotation. Le corps 132 du bouchon est enveloppé d'un capuchon plastique 150 serti en 152 qui, par friction, doit entraîner le corps en rotation pour sa mise en place sur le raccord de remplissage. Une fois monté sur le raccord de remplissage, ce capuchon 150 est libre en rotation et tourne dans le vide si on le force.

L'extraction du bouchon ne peut se faire qu'avec un outil particulier 160 représenté sur la figure 6b. L'utilisation de l'outil est très simple et peut se faire d'une seule main.

Le corps 162 de l'outil d'extraction du bouchon se présente sous la forme d'un tube dont le diamètre intérieur est ajusté glissant sur le diamètre extérieur du corps 132 du bouchon. Le corps de l'outil comporte une rainure verticale 164 dans laquelle vient se loger un crochet escamotable 166. Ce crochet peut tourner autour d'un axe rotulant 168 de façon à pouvoir s'escamoter lors de la mise en place de l'outil sur le bouchon à extraire. Un anneau élastique 170 permet de ramener en permanence le crochet escamotable 166 en configuration de travail. Une couronne 172 permet d'une part d'emprisonner l'axe 168 du crochet 166 dans son logement et d'autre part de manoeuvrer l'outil de démontage. Cette couronne 172 est montée en force sur le corps 162 de l'outil.

Pour démonter le bouchon du raccord de remplissage, il suffit d'enfiler le corps tubulaire 162 de l'outil d'extraction autour du bouchon. Pendant cette opération, afin de faciliter le passage de l'outil, le crochet 166 s'escamote. Une fois que l'extrémité du crochet 166 a dépassé le fond du bouchon correspondant au sertissage 138, l'anneau élastique 170 lui fait retrouver sa position de travail (dans cette position, l'outil 160 est monté sur le bouchon à enlever). Pour commencer l'extraction, il faut dans un premier temps remonter l'outil en le tournant de manière à ce que le crochet 166 trouve un des logements 174 prévus dans le bord inférieur de la bague du bouchon. Une fois cette opération terminée, il faut tourner l'outil de manière à combattre l'effort du ressort 144 du bouchon de façon à amener le bouchon dans l'état déverrouillé. Le bouchon étant déverrouillé, il ne reste plus qu'à l'enlever en tirant l'outil vers le haut. Pour récupérer le bouchon 9, il suffit de le faire sortir du corps tubulaire de l'outil 160 par le côté opposé au crochet 166.

## Revendications

1. Robinet détendeur intégré pour récipient de fluide sous pression destiné à coopérer avec une prise de conditionnement (24, 70, 98) pour permettre le remplissage dudit récipient comprenant :
un raccord de remplissage (14, 52, 90) présentant un axe longitudinal, une extrémité de guidage (18, 58, 96), et un filetage (22, 62, 104) décalé axialement par rapport à ladite extrémité, ladite extrémité ayant un contour muni d'au moins une empreinte (40, 68, 102) faisant saillie hors dudit contour, en projection dans un plan orthogonal audit axe longitudinal, l'empreinte de l'extrémité dudit raccord étant sécante avec un cercle centré sur ledit axe et dont le diamètre est égal au plus petit des diamètres interne et externe dudit filetage.

2. Robinet pour récipient de fluide sous pression destiné à coopéer avec une prise de conditionnement (24, 70, 98) pour permettre le remplissage dudit récipient comprenant :
un raccord de remplissage (14, 52, 90) présentant un axe longitudinal, une extrémité de guidage (18, 58, 96), et un filetage (22, 62, 104) décalé axialement par rapport à ladite extrémité, ladite extrémité ayant un contour muni d'au moins une empreinte (40, 68, 102) faisant saillie hors dudit contour, en projection dans un plan orthogonal audit axe longitudinal, l'empreinte de l'extrémité dudit raccord étant sécante avec un cercle centré sur ledit axe et dont le diamètre est égal au plus petit des diamètres interne et externe dudit filetage.

3. Robinet détendeur intégré pour récipient de gaz sous pression équipé d'une prise de conditionnement (24, 70, 98) apte à coopérer avec ledit robinet pour permettre le remplissage dudit récipient, ledit robinet comprenant un raccord de remplissage (14, 52, 90) présentant un axe longitudinal et une extrémité de guidage (18, 58, 96) et un filetage (22, 62, 104) décalé axialement par rapport à ladite extrémité, ladite extrémité ayant un contour muni d'au moins une empreinte (40, 68, 102) faisant saillie hors dudit contour, ladite prise de conditionnement présentant une extrémité munie d'un filetage (34, 76, 114) apte à coopérer avec le filetage dudit robinet, le filetage de ladite prise présentant au moins une empreinte (42, 79, 116) conjuguée de l'empreinte de l'extrémité dudit raccord, en projection dans un plan orthogonal audit axe longitudinal l'empreinte de l'extrémité dudit raccord étant sécante avec un cercle centré sur ledit axe et dont le diamètre est égal au plus petit des diamètres interne et externe du filetage de ladite prise, par quoi pour une position angulaire donnée autour dudit axe longitudinal ladite prise peut être engagée autour dudit raccord et les deux filetages coopérer entre eux.

4. Robinet selon la revendication 3, **caractérisé en ce que** la distance axiale entre l'empreinte (40, 68, 102) de l'extrémité dudit raccord et le filetage (22, 62, 104) dudit robinet est supérieure à la longueur axiale du filetage (34, 76, 114) de ladite prise.

5. Robinet selon l'une quelconque des revendications 3 et 4, **caractérisé en ce que** ledit raccord (14, 90) est mâle, **en ce que** le filetage du robinet est un filetage externe (22, 104) et le filetage de ladite prise un taraudage (34, 114), **en ce que** ladite empreinte (40, 102) de l'extrémité du raccord fait saillie hors dudit contour, et **en ce que** l'empreinte (42, 116) de ladite prise est un évidement ménagé dans le taraudage (34, 114) de ladite prise.

6. Robinet selon l'une quelconque des revendications 3 et 4, **caractérisé en ce que** ledit raccord (52) est femelle, **en ce que** le filetage du robinet est un taraudage (62) et le filetage de la prise est un filetage externe (76), **en ce que** l'empreinte (68) de l'extrémité du raccord fait saillie à l'intérieur du contour de l'extrémité du raccord et **en ce que** l'empreinte de ladite prise est un évidemment (79) dans le filetage externe de ladite prise.

7. Robinet selon l'une quelconque des revendications 1 à 5, **caractérisé en ce que** ledit robinet comporte une pluralité d'empreintes.

8. Prise de conditionnement (24, 70, 98) susceptible de coopérer avec un robinet ou un robinet à détendeur intégré selon l'une des revendications 1 ou 2 pour permettre le remplissage dudit récipient, ladite prise de conditionnement présentant une extrémité munie d'un filetage (34, 76, 114) apte à coopérer avec le filetage dudit robinet, le filetage de ladite prise présentant au moins une empreinte (42, 79, 116) conjuguée de l'empreinte de l'extrémité dudit raccord, en projection dans un plan orthogonal audit axe longitudinal l'empreinte de l'extrémité dudit raccord étant sécante avec un cercle centré sur ledit axe et dont le diamètre est égal au plus petit des diamètres interne et externe du filetage de ladite prise, par quoi pour une position angulaire donnée autour dudit axe longitudinal ladite prise peut être engagée autour dudit raccord et les deux filetages coopérer entre eux.

9. Bouteille de fluide sous pression équipée d'un robinet selon la revendication 2 ou d'un robinet à détendeur intégré selon la revendication 1.

10. Utilisation d'une bouteille de gaz selon la revendication 9 dans une opération de soulage, de coupage ou de traitement thermique.

11. Utilisation d'un robinet selon l'une quelconque des revendications 1 à 7 ou d'une prise de conditionnement selon la revendication 8 pour le remplissage d'un récipient de gaz sous pression.

## Claims

1. Integrated pressure reducing valve for a pressurized-fluid container intended to collaborate with a conditioning connection (24, 70, 98) to allow said container to be filled, comprising:
a filling coupling (14, 52, 90) having a longitudinal axis, a guide end (18, 58, 96) and a screw thread (22, 62, 104) offset axially with respect to said end, said end having a contour equipped with at least one impression (40, 68, 102) protruding from said contour, in projection in a plane orthogonal to said longitudinal axis, the impression of the end of said coupling being secant with a circle centered on said axis and the diameter of which is equal to the smallest of the inside and outside diameters of said screw thread.

2. Valve for a pressurized-fluid container intended to collaborate with a conditioning connection (24, 70, 98) to allow said container to be filled, comprising:
a filling coupling (14, 52, 90) having a longitudinal axis, a guide end (18, 58, 96) and a screw thread (22, 62, 104) offset axially with respect to said end, said end having a contour equipped with at least one impression (40, 68, 102) protruding from said contour, in projection in a plane orthogonal to said longitudinal axis, the impression of the end of said coupling being secant with a circle centered on said axis and the diameter of which is equal to the smallest of the inside and outside diameters of said screw thread.

3. Integrated pressure-reducing valve for a pressurized-gas container equipped with a conditioning connection (24, 70, 98) able to collaborate with said valve to allow said container to be filled, said valve comprising a filling coupling (14, 52, 90) having a longitudinal axis, and a guide end (18, 58, 96) and a screw thread (22, 62, 104) offset axially with respect to said end, said end having a contour equipped with at least one impression (40, 68, 102) projecting from said contour, said conditioning connection having an end equipped with a screw thread (34, 76, 114) able to collaborate with the screw thread of said valve, the screw thread of said connection having at least one impression (42, 79, 116) that is the mate of the impression of the end of said coupling, in projection in a plane orthogonal to said longitudinal axis the impression of the end of said coupling being secant with a circle centered on said axis and the diameter of which is equal to the smallest of the inside and outside diameters of the screw thread of said connection, by means of which, for a given angular position about said longitudinal axis, said connection can be engaged around said coupling and the two screw threads can collaborate with one another.

4. Valve according to Claim 3, **characterized in that** the axial distance between the impression (40, 68, 102) of the end of said coupling and the screw thread (22, 62, 104) of said valve is greater than the axial length of the screw thread (34, 76, 114) of said connection.

5. Valve according to either one of Claims 3 and 4, **characterized in that** said coupling (14, 90) is male and **in that** the screw thread of the valve is an external screw thread (22, 104) and the screw thread of said connection is a tapped thread (34, 114), **in that** said impression (40, 102) of the end of the coupling protrudes from said contour and **in that** the impression (42, 116) of said coupling is a recess formed in the tapped thread (34, 114) of said connection.

6. Valve according to either one of Claims 3 and 4, **characterized in that** said coupling (52) is female, **in that** the screw thread of the valve is a tapped thread (62) and the screw thread of the connection is an external screw thread (76), **in that** the impression (68) of the end of the coupling protrudes into the contour of the end of the coupling and **in that** the impression of said connection is a recess (79) in the external screw thread of said connection.

7. Valve according to any one of Claims 1 to 5, **characterized in that** said valve comprises a number of impressions.

8. Conditioning connection (24, 70, 98) able to collaborate with a valve or a valve with integrated pressure reducer according to one of claims 1 and 2 to allow said container to be filled, said conditioning connection having an end equipped with a screw thread (34, 76, 114) able to collaborate with the screw thread of said valve, the screw thread of said connection having at least one impression (42, 79, 116) that is the mate of the impression of the end of said coupling, in projection in a plane orthogonal to said longitudinal axis the impression of the end of said coupling being secant with a circle centered on said axis and the diameter of which is equal to the smallest of the inside and outside diameters of the screw thread of said connection, by means of which, for a given angular position about said longitudinal axis, said connection can be engaged around said coupling and the two screw threads can collaborate with one another.

9. Cylinder of pressurized fluid which is equipped with a valve according to Claim 2 or with an integrated pressure-reducing valve according to Claim 1.

10. Use of a gas cylinder according to Claim 9 in a welding, cutting or heat treatment operation.

11. Use of a valve according to any one of Claims 1 to 7 or of a conditioning connection according to Claim 8 to fill a pressurized-gas container.

## Patentansprüche

1. Ventil mit integriertem Druckminderer für einen unter Druck stehenden Fluidbehälter, das zur Füllung des Behälters mit einem Konditionierungsanschluss (24, 70, 98) in Eingriff bringbar ist, umfassend:
einen Füllstutzen (14, 52, 90) mit einer Längsachse, ein Führungsende (18, 58, 96) und ein zu diesem Ende axial versetztes Gewinde (22, 62, 104), wobei das Ende einen Umriss aufweist, der mit mindestens einer Prägung (40, 68, 102) versehen ist, die in einer Ebene orthogonal zur Längsachse vorspringend aus diesem Umriss herausragt, wobei die Prägung des Endes dieses Stutzens einen zu dieser Achse zentrischen Kreis schneidet, und dessen Durchmesser dem kleinsten der Innen- und Außendurchmesser des Gewindes entspricht.

2. Ventil für einen unter Druck stehenden Fluidbehälter, das zur Füllung des Behälters mit einem Konditionierungsanschluss (24, 70, 98) in Eingriff bringbar ist, umfassend:
einen Füllstutzen (14, 52, 90) mit einer Längsachse, ein Führungsende (18, 58, 96) und ein zu diesem Ende axial versetztes Gewinde (22, 62, 104), wobei das Ende einen Umriss aufweist, der mit mindestens einer Prägung (40, 68, 102) versehen ist, die in einer Ebene orthogonal zur Längsachse vorspringend aus diesem Umriss herausragt, wobei die Prägung des Endes dieses Stutzens einen zu dieser Achse zentrischen Kreis schneidet, und dessen Durchmesser dem kleinsten der Innen- und Außendurchmesser des Gewindes entspricht.

3. Ventil mit integriertem Druckminderer für einen Druckgasbehälter, ausgestattet mit einem Konditionierungsanschluss (24, 70, 98), der zur Füllung des Behälters mit dem Ventil in Eingriff bringbar ist, wobei das Ventil einen Füllstutzen (14, 52, 90) mit einer Längsachse und ein Führungsende (18, 58, 96) und ein zu diesem Ende axial versetztes Gewinde (22, 62, 104) umfasst, wobei das Ende einen Umriss aufweist, der mit mindestens einer aus diesem Umriss herausragenden Prägung (40, 68, 102) versehen ist, wobei der Konditionierungsanschluss ein mit einem Gewinde (34, 76, 114) versehenes Ende aufweist, das mit dem Gewinde des Ventils in Eingriff bringbar ist, wobei das Gewinde des Anschlusses mindestens eine Prägung (42, 79, 116) aufweist, die das Gegenstück zur Prägung des Endes des Stutzens bildet und in einer zur Längsachse orthogonalen Ebene vorspringt, wobei die Prägung des Endes des Stutzens einen zu dieser Achse zentrischen Kreis schneidet, und dessen Durchmesser dem kleinsten Innen- und Außendurchmesser des Gewindes dieses Anschlusses entspricht, so dass, für eine gegebene Winkelposition um diese Längsachse, der Anschluss um diesen Stutzen und die beiden Gewinde untereinander in Eingriff bringbar sind.

4. Ventil nach Anspruch 3, **dadurch gekennzeichnet, dass** der axiale Abstand zwischen der Prägung (40, 68, 102) des Endes des Stutzens und dem Gewinde (22, 62, 104) des Ventils größer ist als die axiale Länge des Gewindes (34, 76, 114) des Anschlusses.

5. Ventil nach einem der Ansprüche 3 und 4, **dadurch gekennzeichnet, dass** der Stutzen (14, 90) ein Steckstutzen ist, dass das Gewinde des Ventils ein Außengewinde (22, 104) und das Gewinde des Anschlusses ein Innengewinde (34, 114) ist, dass die Prägung (40, 102) des Endes des Stutzens aus dem Umriss herausragt, und dass die Prägung (42, 116) des Anschlusses eine im Innengewinde (34, 114) des Anschlusses eingebrachte Ausnehmung ist.

6. Ventil nach einem der Ansprüche 3 und 4, **dadurch gekennzeichnet, dass** der Stutzen (52) ein Aufnahmestutzen ist, dass das Gewinde des Ventils ein Innengewinde (62) und das Gewinde des Anschlusses ein Außengewinde (76) ist, dass die Prägung (68) am Ende des Stutzens in den Umriss des Endes des Stutzens hineinragt und dass die Prägung des Anschlusses eine Ausnehmung (79) im Außengewinde des Anschlusses ist.

7. Ventil nach einem der Ansprüche 1 bis 5, **dadurch gekennzeichnet, dass** das Ventil mehrere Prägungen aufweist.

8. Konditionierungsanschluss (24, 70, 98), der zum Füllen des Behälters mit einem Ventil bzw. einem Ventil mit integriertem Druckminderer nach einem der Ansprüche 1 bzw. 2 in Eingriff bringbar ist, wobei der Konditionierungsanschluss ein mit einem Gewinde (34, 76, 114) versehenes Ende aufweist, das mit dem Gewinde des Ventils in Eingriff bringbar ist, wobei das Gewinde des Anschlusses mindestens eine Prägung (42, 79, 116) aufweist, die das Gegenstück zur Prägung des Endes des Stutzens bildet und in einer zur Längsachse orthogonalen Ebene vorspringt, wobei die Prägung des Endes des Stutzens einen zu dieser Achse zentrischen Kreis schneidet, und dessen Durchmesser dem kleinsten Innen- und Außendurchmesser des Gewindes dieses Anschlusses entspricht, so dass, für eine gegebene Winkelposition um diese Längsachse, der Anschluss um den Stutzen und die beiden Gewinde untereinander in Eingriff bringbar sind.

9. Unter Druck stehende Fluidflasche, ausgestattet mit einem Ventil nach Anspruch 2 oder mit einem Ventil mit integriertem Druckminderer nach Anspruch 1.

10. Verwendung einer Gasflasche nach Anspruch 9 bei einem Schweiß-, Schneid- oder Wärmebehandlungsvorgang.

11. Verwendung eines Ventils nach einem der Ansprüche 1 bis 7 bzw. eines Konditionierungsanschlusses nach Anspruch 8 zum Füllen eines Druckgasbehälters.
